# EUROPÄISCHE PATENTSCHRIFT

(11) **EP 2 379 850 B1**
(45) Veröffentlichungstag und Bekanntmachung des Hinweises auf die Patenterteilung: **13.03.2013**
(21) Anmeldenummer: 09804243.5
(22) Anmeldetag: 11.12.2009
(51) Int. Cl.: F01L 1/047, B21D 53/84, B23P 11/02

(54) **VERFAHREN UND VORRICHTUNG ZUR POSITIONIERUNG MEHRERER FUNKTIONSELEMENTE IN EINER VORBESTIMMTEN WINKELPOSITION AUF EINER WELLE**
METHOD AND DEVICE FOR PLACING A PLURALITY OF FUNCTIONAL ELEMENTS IN A PREDETERMINED ANGULAR POSITION ON A SHAFT
PROCÉDÉ ET DISPOSITIF DE POSITIONNEMENT DE PLUSIEURS ÉLÉMENTS FONCTIONNELS DANS UNE POSITION ANGULAIRE DÉFINIE SUR UN ARBRE

(30) Priorität: 22.12.2008 DE 102008064194
(43) Veröffentlichungstag der Anmeldung: 26.10.2011
(73) Patentinhaber: Volkswagen Aktiengesellschaft, 38440 Wolfsburg (DE)
(72) Erfinder: SCHMECKENBECHER, Klaus, 09235 Burkhardtsdorf (DE); HOFFMANN, Christoph, 09120 Chemnitz (DE); HINKEL, Michael, 09125 Chemnitz (DE); HELBIG, Matthias, 09117 Chemnitz (DE); WERLER, Andreas, 08056 Zwickau (DE); KÜHN, Stefan, 09573 Augustusburg (DE); NEUKIRCHNER, Heiko, 09125Chemnitz (DE); RICHTER, Tilo, 09212 Limbach-Oberfrohna (DE); LUDWIG, Torsten, 09116 Chemnitz (DE)
(74) Vertreter: Scheffler, Jörg
(86) Internationale Anmeldenummer: PCT/DE2009/001738
(87) Internationale Veröffentlichungsnummer: WO 2010/072194

(56) Entgegenhaltungen:
- EP-A1- 0 931 604
- EP-A1- 1 936 131
- WO-A1-2008/061382
- DE-A1- 2 336 241
- DE-A1- 19 831 772

## Beschreibung

Die Erfindung betrifft eine Vorrichtung zur Positionierung beziehungsweise zur Montage mehrerer eine Ausnehmung für eine Welle aufweisender Funktionselemente, insbesondere Nocken, Ausgleichsmassen, Zahnräder und/oder Lager, in einer vorbestimmten Winkelposition auf der Welle innerhalb eines Gehäuses, wobei die Vorrichtung eine Auflage für das Gehäuse und mehrere für jeweils ein Funktionselement bestimmte Aufnahmen aufweist, die jeweils mit einer die Winkelposition des jeweiligen Funktionselements entsprechend der Winkelposition auf der Welle festlegenden Ausformung ausgestattet ist, wobei die Aufnahmen derart in dem Gehäuse positionierbar sind, dass die Ausnehmungen der Funktionselemente sowie Durchbrechungen des Gehäuses auf einer gemeinsamen Geraden liegen, also zueinander fluchten, sodass die Welle seitlich durch die Ausnehmungen und Durchbrechungen eingeschoben werden kann. Weiterhin betrifft die Erfindung ein Verfahren zur Anwendung der Vorrichtung.

Die EP 1 155 770 B1 betrifft ein Montageverfahren sowie eine Vorrichtung zur Montage eines Verbundes, insbesondere für ein Massenausgleichsgetriebe oder einen Zylinderkopf, mit in einem Gehäuse auf wenigstens einer das Gehäuse durchdringenden Welle drehbar gelagerten Elementen, wie beispielsweise Ausgleichsmassen, Nocken oder Zahnrädern. Die Auflagen sind derart ausgebildet, dass die eingelegten Elemente bzw. Drehmassen in ihrer späteren relativen Position im Gehäuse positionierbar sind. Hierzu wird das Gehäuse über die Elemente gestülpt. Dadurch befinden sich die entsprechenden Mittelpunkte der Bohrungen für Gleitlager im Gehäuse und die Mittelpunkte der Durchführungen der Elemente auf derselben Linie. Die Ausgleichswellen werden mit flüssigem Stickstoff auf minus 210 °C abgekühlt. Die unterkühlten Ausgleichswellen können dann nahezu kraftfrei bis zum Bund in das Gehäuse und durch die Elemente hindurch eingeführt werden. Durch die anschließende Erwärmung der Ausgleichswellen entstehen zwischen den Elementen und der jeweiligen Ausgleichswelle eine Pressverbindung und ein definiertes axiales Spiel in einem vorderen Fanglager. In einer alternativen Ausführungsform des Montageverfahrens werden die Elemente auf ca. 230 °C erhitzt.

Die DE 198 31 772 A1 betrifft einen Zylinderkopf für eine Verbrennungskraftmaschine mit einem Nockenwellengehäuse, in dem in voneinander beabstandeten parallelen Stegen fluchtende zylindrische Bohrungen als Lagerstellen einer ventilsteuernden Nockenwelle ausgebildet sind. Die Nockenwelle wird im Zylinderkopf verdrehfest zusammengefügt. Hierzu wird pro zu betätigendem Ventil ein Nockenelement eingesetzt, die Welle von der Seite eingeschoben und gegebenenfalls verdreht. Diese Vorgangsweise hat den Vorteil, dass jedes Nockenelement mit seinem Grundkreis zum Ventilstößel weisend eingesetzt werden kann.

Die EP 0 592 068 A1 betrifft eine Vorrichtung zur Einstellung der Winkellage eines Nockens auf einer Welle. Hierzu sind Andrückelemente vorgesehen, welche gegen die Nocken anlegbar sind, um diese in die gewünschte Winkellage zu bringen. Die Andrückelemente sind hierzu gegen einen Abschnitt der Umfangsfläche des Nockens konturbündig anlegbar.

Die DE 600 33 207 T2 bezieht sich auf eine Vorrichtung zur Herstellung von Nockenwellen, bei der Betätigungselemente gegen die Nocken anlegbar sind und auf diese Momente zur Zentrierung und Winkelausrichtung übertragen.

Die DE 38 50 503 T2 beschreibt eine Vorrichtung zur Montage von Nocken auf einer Nockenwelle mit mehreren, die Winkellage festlegenden Anschlägen und einer auf die Nocken wirkenden Positionierungsvorrichtung. Zur Justierung werden die Anschläge unterlegt oder mit Zwischenstücken versehen.

Die DE 39 33 565 A1 betrifft ein Verfahren und eine Vorrichtung zur Montage von aus einem rohr- oder stabförmigen Grundkörper und einzelnen darauf aufgeschobenen ringförmigen Elementen aufgebauten Wellen, insbesondere Nockenwellen, wobei die Elemente Nocken-, Zahnräder oder Lagerschalen darstellen können. Die auf den Grundkörper aufgeschobenen Elemente werden mittels magnetischer Kräfte in der zur Befestigung erforderlichen Winkelposition gehalten. Hierbei ist eine Feinjustierung der axialen Position möglich. Die Einrichtung der Winkelposition aus einer einheitlichen Grundposition heraus kann ausschließlich mit magnetischen Kräften bewirkt werden.

Die EP 1 936 131 A1 betrifft ein Verfahren zur Montage und Herstellung einer Nockenwelle, die einen Wellenkörper mit kreisförmigem Querschnitt und Nockenerhebungen umfasst, wobei die Nockenerhebungen ein separates Teil bilden, das nicht integral mit dem Wellenkörper verbunden ist. Das Verfahren umfasst das Bereitstellen eines Trägers, der eine Mehrzahl kreisförmiger Lagerlöcher aufweist, die auf derselben Achse angeordnet sind. Nach der Positionierung der Nockenerhebungen zwischen benachbarten Lagerlöchem werden die Nockenerhebungen durch Schrumpfverbindungen oder durch eine Schweißverbindung auf dem Wellenkörper fixiert.

Als nachteilig erweist sich in der Praxis der mit der Einstellung der vorbestimmten Winkelposition der Funktionselemente auf der Welle verbundene Aufwand. Bereits eine geringfügige Relativbewegung der Funktionselemente in der Ausformung führt im Allgemeinen bereits zu einer Abweichung, die eine Neupositionierung der gesamten Vorrichtung erforderlich macht. Weiterhin erfordert die Montage verschiedener Nockenwellen grundsätzlich mehrere Vorrichtungen.

Vor diesem Hintergrund liegt der Erfindung die Aufgabe zugrunde, die Montage eines Verbundes aus einer Welle, auf diesen lagerichtig positionierter Funktionselemente sowie eines die Welle mit den Funktionselementen einschließenden Gehäuses wesentlich zu vereinfachen. Weiterhin soll ein dementsprechend verbessertes Verfahren geschaffen werden.

Die erstgenannte Aufgabe wird gelöst mit einer Vorrichtung gemäß den Merkmalen des Patentanspruchs 1. Die Unteransprüche 2 bis 17 betreffen besonders zweckmäßige Weiterbildungen der Vorrichtung.

Dadurch, dass zumindest einzelne der Ausformungen eine einstellbare Winkelposition aufweisen, wird eine exakte Positionierung der Funktionselemente nach dem Einfügen der Welle ermöglicht, sodass zunächst nur eine grobe Vorpositionierung erforderlich wird. Das Einfügen der Welle wird dadurch wesentlich vereinfacht, weil die Anforderungen an den Fügeprozess auf diese Weise vermindert werden können. Insbesondere führt also eine geringe Winkeländerung der Welle während der Fügebewegung der Welle nicht dazu, dass die aufgeschobenen Funktionselemente in ihrer fehlerhaften relativen Winkelposition zu einem Ausschussteil führen. Vielmehr gestattet die Relativbewegung der Ausformungen und damit jedes einzelnen Funktionselements eine Feinjustierung der Funktionselemente nach dem Einfügen der Welle, sodass höchste Genauigkeitsanforderungen ohne eine Verzögerung des Montageprozesses erreicht werden können. Darüber hinaus können aber auch unterschiedliche Funktionselemente bzw. die damit ausgerüsteten Wellen mittels derselben Aufnahmen hergestellt werden, weil deren abweichende relative Winkelposition in einfacher Weise mittels der beweglichen Aufnahmen eingestellt werden können, ohne dass hierzu eine andere Vorrichtung erforderlich ist. Die Funktionselemente können beispielsweise als insbesondere ungeteilte Nockenwellen, Lager, Zahnkränze etc. ausgeführt sein, um so Nocken- oder Ausgleichswellen herzustellen.

Grundsätzlich könnte zur Einstellung der Winkelposition des jeweiligen Funktionselements die gesamte Aufnahme bewegt, insbesondere geschwenkt oder verfahren werden. Besonders praxisgerecht ist hingegen eine Abwandlung der Erfindung, bei der die Ausformungen relativ zu der jeweiligen Aufnahme beweglich, insbesondere schwenkbeweglich angeordnet sind. Hierdurch wird in einfacher Weise die Einstellbarkeit durch eine Schwenkbewegung der Ausformung erreicht, ohne dass die Aufnahme bewegt werden muss. Der Platzbedarf zur Realisierung der Verstellbewegung ist daher minimal, sodass sich die erfindungsgemäße Vorrichtung bei nahezu allen Brennkraftmaschinen problemlos einsetzen lässt.

Dabei ist es von Vorteil, wenn die Ausformung zumindest eingeschränkt schwenkbeweglich und unverlierbar an der Aufnahme angeordnet ist, sodass die Betriebessicherheit erhöht und mögliche Fehlerquellen zuverlässig ausgeschlossen werden können.

Eine weitere besonders zweckmäßige Ausgestaltung der vorliegenden Erfindung wird auch dadurch realisiert, dass die Ausformung entlang eines zumindest abschnittsweise kreisbogenförmigen Kontaktbereichs an ihrem Umfang relativ zu der Aufnahme beweglich ist. Hierdurch wird einerseits eine kompakte Bauform der Aufnahme erreicht, andererseits wird das Einfügen der Welle aufgrund der umfangsseitigen Lagerung in keiner Weise eingeschränkt. Alternativ können auch zumindest drei Lager am Umfang verteilt angeordnet sein, um so diskrete Kontaktpunkte zu ermöglichen. Ferner könnte die Ausformung mittels eines Radiallagers in der Aufnahme beweglich gelagert sein.

Zur Reduzierung der dabei auftretenden Reibungswiderstände eignen sich bevorzugt solche Abwandlungen, bei denen die Aufnahme eine der Ausformung zugewandte, reibmindemde Oberflächenbeschaffenheit und/oder ein Gleitelement aufweist.

Dabei erweist es sich als besonders praxisnah, wenn zumindest einzelne Ausformungen austauschbar an der jeweiligen Aufnahme angeordnet sind, sodass bedarfsweise eine schnelle Anpassung an unterschiedliche Funktionselemente vorgenommen werden kann. Die Anpassung kann dabei selbstverständlich auch durch den Einsatz von Adapter- oder Reduzierelementen erfolgen.

Bei einer anderen, ebenfalls besonders Erfolg versprechenden Abwandlung weist die Ausformung einen kreisbogenförmigen Abschnitt auf und ist mittels eines Führungselements, welches in eine zu dem kreisförmigen Abschnitt konzentrische Bahn, insbesondere Nut, der Aufnahme eingreift, mit diesem verbunden. Dadurch bestimmt das Führungselement nicht nur die Freiheitsgrade der Ausformung, sondern dient zugleich auch zur Einstellung der Winkelposition als Betätigungselement, insbesondere Hebel. Die Bahn bildet dabei ähnlich einer Kulissenführung ein Widerlager für das Führungselement, welches mit einer Abwinkelung in die beispielsweise nutenförmige Bahn eingreift. Das Führungselement kann dabei auch als eine Klammer ausgeführt sein, die in einander gegenüberliegenden Seiten der Aufnahme in jeweils eine kreisbogenförmige Nut eingreift.

Die Ausformung dient im Wesentlichen als Anschlag für eine reproduzierbare Winkelposition des jeweiligen Funktionselements. Besonders zweckmäßig ist es darüber hinaus, wenn die Ausformung zur Aufnahme des Funktionselements umfangsseitig zumindest abschnittsweise formschlüssig ausgeführt ist. Hierdurch wird eine zuverlässige Positionierung des Funktionselements erreicht, welche insbesondere ein Verschwenken desselben in beide Richtungen gestattet, ohne dass eine unerwünschte Relativbewegung des Funktionselements gegenüber der Ausformung zu befürchten ist.

Dabei wird die vorbestimmte Position des Funktionselements in einfacher Weise dadurch sichergestellt, dass die Ausformung mit einem Fixiermittel zur vorübergehenden Fixierung des Funktionselements in der Aufnahme ausgestattet ist, um so eine unerwünschte Verlagerung, insbesondere ein Kippen des Funktionselements ausschließen zu können. Als Fixiermittel eignen sich Haltemittel basierend auf mechanischer kraft- oder formschlüssiger Fixierung, auf Magnetkräften oder mittels Unterdruck.

Die zur Änderung der Winkelposition erforderlichen Betätigungskräfte könnten mittels eines Zahnradgetriebes oder mittels eines Schneckengetriebes übertragen werden. Besonders vorteilhaft ist es jedoch, wenn die Ausformung mittels eines Hebelarmes mit einem Spindeltrieb verbunden ist. Hierdurch wird eine exakte Einstellbarkeit der Ausformung erreicht, indem mittels des Spindeltriebes ein Schlitten verfahrbar ist, welcher auf den Hebelarm der Ausformung wirkt, insbesondere also zu einer tangentialen Wirkrichtung der Betätigungskraft führt.

Eine weitere besonders Erfolg versprechende Abwandlung wird dadurch erreicht, dass der Ausformung eine Betätigungseinheit zugeordnet ist, welche parallel zu der Ebene der Schwenkbewebung beweglich und mittels eines Mitnehmers mit der Ausformung verbunden ist. Hierdurch wird zur Einstellung der Winkelposition eine Ansteuerung nach dem Prinzip einer Kurbelstange realisiert, wobei die Betätigungseinheit eine Stange oder einen Schlitten aufweist, welche auf den Mitnehmer ein Drehmoment übertragen. Bei einem auf einen einzigen Freiheitsgrad beschränkte Betätigungseinheit, insbesondere eine Schubstange, dient ein Langloch dem Ausgleich in Querrichtung.

Die Winkelposition der Funktionselemente kann mit an sich bekannten berührenden oder berührungslosen Messeinrichtungen erfasst werden. Besonders hilfreich erweist sich eine Ausgestaltung der Erfindung, bei welcher der Ausformung zumindest eine Markierung und/oder eine Sensorik zur Erfassung der jeweiligen Winkelposition zugeordnet ist, um so ohne aufwendige Messverfahren ein exakte Positionierung der Funktionselemente in der vorbestimmten Winkelposition sicherzustellen.

Die relative Positionierung der Funktionselemente gegenüber der Welle und dieser gegenüber dem Gehäuse erfolgt mittels einer hierzu bestimmten Steuerung. Eine andere vorteilhafte Abwandlung wird dadurch geschaffen, dass die Vorrichtung eine Zentrierhilfe, insbesondere einen Zentrierdom, zur relativen Positionierung gegenüber dem Gehäuse aufweist, welche hierzu vorübergehend in die Durchbrechungen in dem Gehäuse einführbar ist, um so auf mechanischem Wege die Zentrierung zu verbessern. Aufgrund der mittels der Zentrierhilfe eingestellten Relativposition wird die jeweilige Position der Bauelemente fixiert und die Montage durchgeführt.

Die Funktionselemente könnten in der Ausformung allein aufgrund der radialen Fixierkräfte gegenüber einer beim Fügen der Welle wirkenden Kraft in Fügerichtung gesichert sein. Besonders einfach ist es hingegen, wenn die Ausformung einen axialen Anschlag entgegen der Fügerichtung der Welle aufweist, sodass der Anschlag zugleich als Widerlager entgegen der Fügekraft dient. Beispielsweise ist dieser Anschlag durch einen gegenüber der jeweiligen Ausnehmung der Ausformung erweiterten, ringförmig geschlossenen Rand gebildet. Denkbar sind auch solche Varianten, bei denen ein vorderseitiger und ein rückseitiger Anschlag eine Tasche bilden, welche das Funktionselement durch Einschieben aufnimmt.

Die Vorrichtung dient vornehmlich der Einstellung der Winkelposition. Besonders vielseitig ist eine Ausführungsform einsetzbar, bei welcher die Ausformung zur Einstellung der axialen relativen Position des Funktionselements auf der Welle in Achsrichtung der Welle beweglich ausgeführt ist, sodass verschiedene axiale Positionen einstellbar sind. Hierzu wird nicht nur eine Feinjustierung der axialen Position des Funktionselements auf der Welle, sondern auch eine Anpassung an verschiedene Bauformen der Welle ermöglicht.

Um die gewünschte spätere Schrumpfverbindung zu erzeugen, werden die Funktionselemente erwärmt und die Welle abgekühlt. Besonders praxisnah ist es auch, wenn der Ausformung eine Heizeinrichtung zur Erwärmung der Funktionselemente zugeordnet ist, um so die Relativbeweglichkeit bis zum Erreichen der vorbestimmten Winkelposition durch die entsprechende Erwärmung der Funktionselemente sicherzustellen. Eine solche Erwärmung erfolgt beispielsweise induktiv.

Die zweitgenannte Aufgabe, nämlich ein wesentlich verbessertes Verfahren zur lagerichtigen Positionierung mehrerer eine Ausnehmung für eine Welle aufweisender Funktionselemente zu schaffen, wird gelöst mit einem Verfahren gemäß den Merkmalen des Patentanspruchs 18, in dem die vorbestimmte Winkelposition zumindest einzelner der mehreren Funktionselemente nach dem Einschieben der Welle durch eine Relativbewegung der Ausformung gegenüber der Aufnahme eingestellt und das jeweilige Funktionselement in der so eingestellten Winkelposition festgelegt wird. Hierdurch wird die Montage der Funktionselemente auf der Welle wesentlich vereinfacht, indem zunächst eine vergleichsweise schnell und einfach durchzuführende Grobpositionierung der Funktionselemente sowie des Gehäuses in einer gemeinsamen Flucht erfolgt. Anschließend erfolgt die Einstellung der vorbestimmten Winkelposition der Funktionselemente durch die jeweilige Relativbewegung der Ausformung gegenüber der Aufnahme, die somit unabhängig von den weiteren Aufnahmen erfolgen kann. Aufgrund dieser getrennten Verfahrensschritte zur Positionierung werden die jeweils zu steuernden Freiheitsgrade reduziert und der Aufwand dadurch vermindert.

Dabei ist es ist von Vorteil, wenn die Ausformung um den Mittelpunkt der für die Welle bestimmten Ausnehmung der Funktionselemente verschwenkt und entlang einer Kreisbahn bewegt wird.

Mittels eines Zahn- oder Riementriebes könnte die Ausformung auch motorisch angetrieben werden. Besonders zweckmäßig ist es jedoch, wenn die Ausformung mittels eines Schiebers, welcher mit einem Hebelarm der schwenkbeweglichen Ausformung zusammenwirkt, manuell eingestellt wird, um so eine feinfühlige Justierung entsprechend der vorbestimmten Winkelposition zu erreichen.

Weiterhin wird die dauerhafte Fixierung der Winkelposition der Funktionselemente auf der Welle dadurch gesteuert, insbesondere also bedarfsweise verzögert, um die Winkelposition korrigieren zu können, wenn die Funktionselemente in ihrer Ausformung erwärmt und dann nach dem Abkühlen aufgeschrumpft werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt jeweils in einer perspektivischen Darstellung in
- Fig. 1: eine Vorrichtung zur Positionierung mehrerer in jeweils einer Aufnahme gehaltener Funktionselemente in einer vorbestimmten Winkelposition auf einer Welle;
- Fig. 2: eine erste Aufnahme des Funktionselements zur Positionierung in einer ersten Winkelposition;
- Fig. 3: eine zweite Aufnahme des Funktionselements zur Positionierung in einer zweiten Winkelposition.

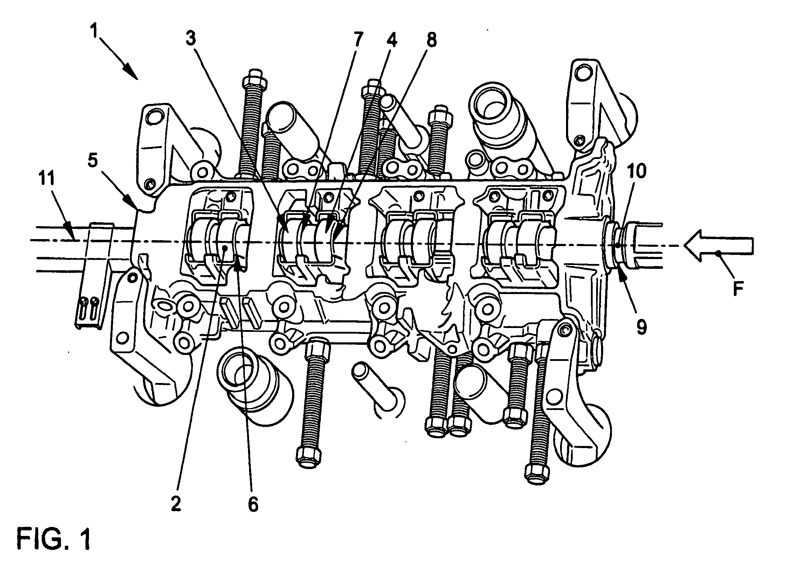

Die erfindungsgemäße Vorrichtung 1 zur Positionierung und zur Montage mehrerer Funktionselemente 2, 3, 4 ist in ihrer Gesamtheit in der Figur 1 in einer perspektivischen Darstellung gezeigt. Hierzu werden die Funktionselemente 2, 3, 4, die hier beispielhaft als Nocken, Lager und Zahnräder ausgeführt sind, im Inneren eines darüber gestülpten Gehäuses 5 zunächst derart positioniert, dass alle Ausnehmungen 6, 7, 8 und Durchbrechungen 9 des Gehäuses 5 für eine Welle 10 in einer Flucht auf einer gemeinsamen Geraden 11 liegen. Anschließend wird die zuvor gekühlte Welle 10 von außen durch die Durchbrechungen des Gehäuses 5 sowie die Ausnehmungen 6, 7, 8 der hierzu erwärmten Funktionselemente 2, 3, 4 in Fügerichtung F eingeschoben. Nach dem Temperaturausgleich entsteht eine dauerhafte Schrumpfverbindung.

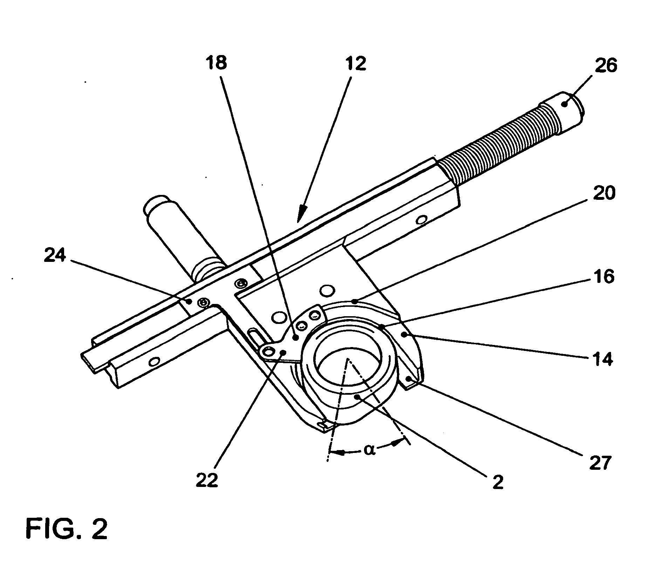

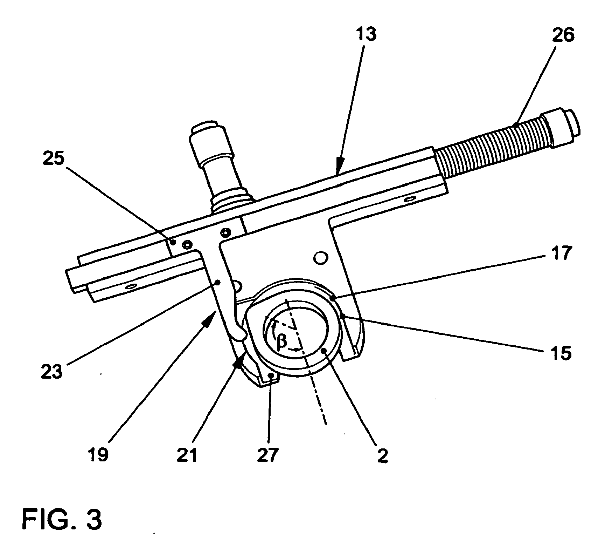

Um die Funktionselemente 2 in der exakt vorbestimmten Winkelposition a, β vorübergehend fixieren zu können, dienen die in den Figuren 2 und 3 vergrößert dargestellten Aufnahmen 12, 13, die sich im Wesentlichen hinsichtlich des einstellbaren Winkelbereiches unterscheiden. Die für die als Nocken ausgeführten Funktionselemente 2 bestimmten Aufnahmen 12, 13 sind jeweils mit einer Ausformung 14, 15 ausgestattet, die relativ zu der jeweiligen Aufnahme 12, 13 schwenkbeweglich ausgeführt sind. Hierdurch lässt sich in einfacher Weise nach der Positionierung innerhalb des Gehäuses 5 die Winkelposition α, β auf der in der Figur 1 gezeigten Welle 10 justieren. Hierzu weist jede Ausformung 14, 15 einen kreisbogenförmigen Abschnitt 16, 17 auf, welcher als reibungsarme Gleitfläche dient. Ein klammerförmiges Führungselement 18, 19 greift in eine konzentrische Nut 20, 21 ein, die damit das Herausfallen der Ausformung 14, 15 aus der Aufnahme 12, 13 verhindert und den Winkelbereich beschränkt Zugleich dient ein Vorsprung des Führungselements 18, 19 als Hebelarm 22, 23 zur Übertragung des für die Schwenkbewegung erforderlichen Drehmoments mittels eines Schiebers 24, 25, welcher mit einem Spindeltrieb 26 zur manuellen Feinjustierung beweglich ist. Jede Ausformung 14, 15 nimmt das Funktionselement 2 zumindest abschnittsweise formschlüssig auf. Zusätzlich hat die Ausformung einen axialen Anschlag 27, welcher als Widerlager für das Funktionselement 2 und für die beim Einschieben der Welle 10 auftretenden Fügekräfte entgegen der Fügerichtung F der Welle 10 dient.

## Patentansprüche

1. Vorrichtung (1) zur Positionierung mehrerer eine Ausnehmung (6, 7, 8) für eine Welle (10) aufweisender Funktionselemente (2, 3, 4), insbesondere Nocken, Ausgleichsmassen, Zahnrädern und/oder Lager, in einer vorbestimmten Winkelposition (α, β) auf der Welle (10) innerhalb eines Gehäuses (5), wobei die Vorrichtung (1) eine Auflage für das Gehäuse (5) und mehrere für jeweils ein Funktionselement (2, 3, 4) bestimmte Aufnahmen (12, 13) aufweist, die jeweils mit einer die Winkelposition (α, β) des jeweiligen Funktionselements (2, 3, 4) entsprechend der Winkelposition auf der Welle (10) festlegenden Ausformung (14, 15) ausgestattet ist, wobei die Aufnahmen (12, 13) derart in dem Gehäuse (5) positionierbar sind, dass die Ausnehmungen (7, 8) der Funktionselemente (2, 3, 4) sowie Durchbrechungen (9) des Gehäuses (5) auf einer gemeinsamen Geraden (11) liegen, **dadurch gekennzeichnet, dass** zumindest einzelne der Ausformungen (14, 15) eine einstellbare Winkelposition (α, β) aufweisen.

2. Vorrichtung (1) nach Anspruch 1, **dadurch gekennzeichnet, dass** die Ausformung (14, 15) relativ zu der jeweiligen Aufnahme (12, 13) beweglich, insbesondere schwenkbeweglich angeordnet ist.

3. Vorrichtung (1) nach den Ansprüchen 1 oder 2, **dadurch gekennzeichnet, dass** die Ausformung (14, 15) zumindest eingeschränkt schwenkbeweglich und unverlierbar an der Aufnahme (12, 13) angeordnet ist.

4. Vorrichtung (1) nach zumindest einem der vorangehenden Ansprüche, **dadurch gekennzeichnet, dass** die Ausformung (14, 15) entlang eines zumindest abschnittsweise kreisbogenförmigen Abschnittes (16, 17) an ihrem Umfang relativ zu der Aufnahme (12, 13) beweglich ist.

5. Vorrichtung (1) nach zumindest einem der vorangehenden Ansprüche, **dadurch gekennzeichnet, dass** die Aufnahme (12, 13) eine der Ausformung (14, 15) zugewandte reibmindemde Oberflächenbeschaffenheit und/oder ein Gleitelement aufweist.

6. Vorrichtung (1) nach zumindest einem der vorangehenden Ansprüche, **dadurch gekennzeichnet, dass** zumindest einzelne Ausformungen (14, 15) austauschbar an der jeweiligen Aufnahme (12, 13) angeordnet sind.

7. Vorrichtung (1) nach zumindest einem der vorangehenden Ansprüche, **dadurch gekennzeichnet, dass** die Ausformung (14, 15) einen kreisbogenförmigen Abschnitt (16, 17) aufweist und mittels eines Führungselements (18, 19), welches in eine zu dem kreisförmigen Abschnitt konzentrische Bahn, insbesondere Nut (20, 21), der Aufnahme (12, 13) eingreift, mit diesem verbunden ist.

8. Vorrichtung (1) nach zumindest einem der vorangehenden Ansprüche, **dadurch gekennzeichnet, dass** die Ausformung (14, 15) zur Aufnahme des Funktionselements (2, 3, 4) umfangsseitig zumindest abschnittsweise formschlüssig ausgeführt ist.

9. Vorrichtung (1) nach zumindest einem der vorangehenden Ansprüche, **dadurch gekennzeichnet, dass** die Ausformung (14, 15) mit einem Fixiermittel zur vorübergehenden Fixierung des Funktionselements (2, 3, 4) in der Aufnahme (12, 13) ausgestattet ist.

10. Vorrichtung (1) nach zumindest einem der vorangehenden Ansprüche, **dadurch gekennzeichnet, dass** die Ausformung (14, 15) mittels eines Hebelarmes (22, 23) mit einem Spindeltrieb (26) verbunden ist.

11. Vorrichtung (1) nach zumindest einem der vorangehenden Ansprüche, **dadurch gekennzeichnet, dass** die Aufnahme (12, 13) einen Schlitten aufweist, welcher mittels eines Drehlagers mit der schwenkbeweglichen Ausformung (14, 15) verbunden ist.

12. Vorrichtung (1) nach zumindest einem der vorangehenden Ansprüche, **dadurch gekennzeichnet, dass** der Ausformung (14, 15) eine Betätigungseinheit zugeordnet ist, welche parallel zu der Ebene der Schwenkbewebung beweglich und mittels eines Mitnehmers mit der Ausformung (14, 15) verbunden ist.

13. Vorrichtung (1) nach zumindest einem der vorangehenden Ansprüche, **dadurch gekennzeichnet, dass** der Ausformung (14, 15) zumindest eine Markierung und/oder eine Sensorik zur Erfassung der jeweiligen Winkelposition zugeordnet ist.

14. Vorrichtung (1) nach zumindest einem der vorangehenden Ansprüche, **dadurch gekennzeichnet, dass** die Vorrichtung (1) eine Zentrierhilfe, insbesondere einen Zentrierdom, zur relativen Positionierung gegenüber dem Gehäuse (5) aufweist, welche hierzu vorübergehend in die Durchbrechungen (9) in dem Gehäuse (5) einführbar ist.

15. Vorrichtung (1) nach zumindest einem der vorangehenden Ansprüche, **dadurch gekennzeichnet, dass** die Ausformung (14, 15) einen axialen Anschlag (27) entgegen der Fügerichtung (F) der Welle (10) aufweist.

16. Vorrichtung (1) nach zumindest einem der vorangehenden Ansprüche, **dadurch gekennzeichnet, dass** die Ausformung (14, 15) zur Einstellung der axialen relativen Position des Funktionselements (2, 3, 4) auf der Welle (10) in Achsrichtung (Gerade 11) der Welle (10) beweglich ausgeführt ist.

17. Vorrichtung (1) nach zumindest einem der vorangehenden Ansprüche, **dadurch gekennzeichnet, dass** der Ausformung (14, 15) eine Heizeinrichtung zur Erwärmung der Funktionselemente (2, 3, 4) zugeordnet ist.

18. Verfahren zur lagerichtigen Positionierung mehrerer eine Ausnehmung für eine Welle aufweisender Funktionselemente, insbesondere Nocken, Ausgleichsmassen, Zahnrädern und/oder Lager, die zunächst relativ zu der Welle beweglich auf die Welle aufgeschoben werden, wobei diese in einer jeweiligen, die Winkelposition des jeweiligen Funktionselements festlegenden Ausformung einer Aufnahme einer Vorrichtung vorübergehend positioniert werden, sodass anschließend in einer Relativposition der Vorrichtung gegenüber dem Gehäuse, in der die Ausnehmungen der Funktionselemente in einer Flucht mit Durchbrechungen des Gehäuses liegen, die Welle von außen durch eine Durchbrechung des Gehäuses und weitere Ausnehmungen der Funktionselemente eingeschoben wird, **dadurch gekennzeichnet, dass** die vorbestimmte Winkelposition zumindest einzelner der mehreren Funktionselemente nach dem Einschieben der Welle durch eine Relativbewegung der Ausformung gegenüber der Aufnahme eingestellt und das jeweilige Funktionselement in der so eingestellten Winkelposition auf der Welle festgelegt wird.

19. Verfahren nach Anspruch 18, **dadurch gekennzeichnet, dass** die Ausformung entlang einer Kreisbahn bewegt wird.

20. Verfahren nach Anspruch 18 oder 19, **dadurch gekennzeichnet, dass** die Ausformung mittels eines Schiebers, welcher mit einem Hebelarm der schwenkbeweglichen Ausformung zusammenwirkt, manuell eingestellt wird.

21. Verfahren nach zumindest einem der Ansprüche 18 bis 20, **dadurch gekennzeichnet, dass** die Funktionselemente in ihrer Ausformung erwärmt werden.

## Claims

1. Apparatus (1) for positioning a plurality of functional elements (2, 3, 4), in particular cams, compensating masses, gearwheels and/or bearings, which have a recess (6, 7, 8) for a shaft (10), in a predefined angular position (α, β) on the shaft (10) within a housing (5), wherein the apparatus (1) has a support for the housing (5) and a plurality of receptacles (12, 13) which are each intended for one functional element (2, 3, 4), respectively, and are each provided with a shaped-out moulding (14, 15) which fixes the angular position (α, β) of the respective functional element (2, 3, 4) in accordance with the angular position on the shaft (10), wherein the receptacles (12, 13) can be positioned in the housing (5) in such a way that the recesses (7, 8) of the functional elements (2, 3, 4) and apertures (9) of the housing (5) lie on a common straight line (11), **characterized in that** at least some of the shaped-out mouldings (14, 15) have an adjustable angular position (α, β).

2. Apparatus (1) according to claim 1, **characterized in that** the shaped-out moulding (14, 15) is movably arranged, in particular pivotably movable, relative to the respective receptacle (12, 13).

3. Apparatus (1) according to claim 1 or 2, **characterized in that** the shaped-out moulding (14, 15) is arranged captively on the receptacle (12, 13) and is arranged pivotably movable on the receptacle (12, 13) at least to a restricted extent.

4. Apparatus (1) according to at least one of the preceding claims, **characterized in that** the shaped-out moulding (14, 15) can be moved relative to the receptacle (12, 13) along a section (16, 17) on its circumference, which section (16, 17) is arcuate at least in sections.

5. Apparatus (1) according to at least one of the preceding claims, **characterized in that** the receptacle (12, 13) has a sliding element and/or a friction-reducing surface property facing the shaped-out moulding (14, 15).

6. Apparatus (1) according to at least one of the preceding claims, **characterized in that** at least individual shaped-out mouldings (14, 15) are arranged exchangeably on the respective receptacle (12, 13).

7. Apparatus (1) according to at least one of the preceding claims, **characterized in that** the shaped-out moulding (14, 15) has an arcuate section (16, 17) and is connected to the arcuate section (16, 17) by means of a guide element (18, 19) which engages into a track, in particular groove (20, 21), of the receptacle (12, 13), which track is concentric with respect to the circular section.

8. Apparatus (1) according to at least one of the preceding claims, **characterized in that** the shaped-out moulding (14, 15) is of positively locking configuration on the circumferential side at least in sections, in order to receive the functional element (2, 3, 4).

9. Apparatus (1) according to at least one of the preceding claims, **characterized in that** the shaped-out moulding (14, 15) is provided with a fixing means for temporarily fixing the functional element (2, 3, 4) in the receptacle (12, 13).

10. Apparatus (1) according to at least one of the preceding claims, **characterized in that** the shaped-out moulding (14, 15) is connected to a spindle drive (26) by means of a lever arm (22, 23).

11. Apparatus (1) according to at least one of the preceding claims, **characterized in that** the receptacle (12, 13) has a slide which is connected to the pivotably movable shaped-out moulding (14, 15) by means of a pivot bearing.

12. Apparatus (1) according to at least one of the preceding claims, **characterized in that** an actuating unit is assigned to the shaped-out moulding (14, 15) wherein the actuating unit is movable in parallel to the plane of the pivoting movement and connected to the shaped-out moulding (14, 15) by means of a dog.

13. Apparatus (1) according to at least one of the preceding claims, **characterized in that** at least one marking and/or one sensor system for detecting the respective angular position is assigned to the shaped-out moulding (14, 15).

14. Apparatus (1) according to at least one of the preceding claims, **characterized in that** the apparatus (1) has a centring aid, in particular a centring mandrel, for relative positioning with respect to the housing (5), which centring aid can be introduced temporarily into the apertures (9) in the housing (5) for this purpose.

15. Apparatus (1) according to at least one of the preceding claims, **characterized in that** the shaped-out moulding (14, 15) has an axial stop (27) counter to the joining direction (F) of the shaft (10).

16. Apparatus (1) according to at least one of the preceding claims, **characterized in that** the shaped-out moulding (14, 15) is arranged movably in the axial direction (straight line 11) of the shaft (10) in order to adjust the axial relative position of the functional element (2, 3, 4) on the shaft (10).

17. Apparatus (1) according to at least one of the preceding claims, **characterized in that** a heating device for heating the functional elements (2, 3, 4) is assigned to the shaped-out moulding (14, 15).

18. Method for the locationally correct positioning of a plurality of functional elements, in particular cams, compensating masses, gearwheels and/or bearings, which have a recess for a shaft, which are first slid on the shaft relatively movable to the shaft, the functional elements being positioned temporarily in a respective shaped-out moulding of a receptacle of an apparatus, which shaped-out moulding fixes the angular position of the respective functional element such that subsequently the shaft is inserted from outside through an aperture of the housing and further recesses of the functional elements in a relative position of the apparatus with respect to the housing, according to which relative position the recesses of the functional elements are aligned with apertures of the housing, **characterized in that** the predefined angular position of at least individual ones of the plurality of functional elements is adjusted after inserting the shaft by a relative movement of the shaped-out moulding with respect to the receptacle, and the respective functional element is fixed in the such adjusted angular position on the shaft.

19. Method according to claim 18, **characterized in that** the shaped-out moulding is moved along a circular path.

20. Method according to claim 18 or 19, **characterized in that** the shaped-out moulding is adjusted manually by means of a slide which interacts with a lever arm of the pivotably movable shaped-out moulding.

21. Method according to at least one of claims 18 to 20, **characterized in that** the functional elements are heated in their shaped-out moulding.

## Revendications

1. Dispositif (1) de positionnement de plusieurs éléments fonctionnels (2, 3, 4) présentant un évidement (6, 7, 8) pour un arbre (10), en particulier des cames, des masses d'équilibrage, des roues dentées et/ou des paliers, dans une position angulaire définie (α, β) sur l'arbre (10) à l'intérieur d'une enceinte (5), dans lequel le dispositif (1) présente un appui pour l'enceinte (5) et plusieurs logements (12, 13) définis respectivement pour un élément fonctionnel (2, 3, 4), qui est doté chaque fois d'une pièce saillante (14, 15) fixant la position angulaire (α, β) de l'élément fonctionnel respectif (2, 3, 4) selon la position angulaire sur l'arbre (10), dans lequel les logements (12, 13) peuvent être positionnés dans l'enceinte (5) de telle manière que les évidements (7, 8) des éléments fonctionnels (2, 3, 4) ainsi que des passages (9) de l'enceinte (5) se trouvent sur une droite commune (11), **caractérisé en ce qu'**au moins certaines des pièces saillantes (14, 15) présentent une position angulaire réglable (α, β).

2. Dispositif (1) selon la revendication 1, **caractérisé en ce que** la pièce saillante (14, 15) est disposée de façon mobile, en particulier mobile par pivotement, par rapport au logement respectif (12, 13).

3. Dispositif (1) selon les revendications 1 ou 2, **caractérisé en ce que** la pièce saillante (14, 15) est disposée de façon mobile par pivotement au moins de façon limitée et de façon imperdable sur le logement (12, 13).

4. Dispositif (1) selon au moins une des revendications précédentes, **caractérisé en ce que** la pièce saillante (14, 15) est mobile le long d'une partie au moins localement en arc de cercle (16, 17) sur sa périphérie par rapport au logement (12, 13).

5. Dispositif (1) selon au moins une des revendications précédentes, **caractérisé en ce que** le logement (12, 13) présente un état de surface réduisant le frottement tourné vers la pièce saillante (14, 15) et/ou un élément de glissement.

6. Dispositif (1) selon au moins une des revendications précédentes, **caractérisé en ce qu'**au moins certaines pièces saillantes (14, 15) sont disposées de façon remplaçable sur le logement respectif (12, 13).

7. Dispositif (1) selon au moins une des revendications précédentes, **caractérisé en ce que** la pièce saillante (14, 15) présente une partie en arc de cercle (16, 17) et est reliée à celle-ci au moyen d'un élément de guidage (18, 19), qui s'engage dans un chemin, en particulier une rainure (20, 21), concentrique à la partie en arc de cercle du logement (12, 13).

8. Dispositif (1) selon au moins une des revendications précédentes, **caractérisé en ce que** la pièce saillante (14, 15) est réalisée au moins localement en forme d'assemblage par emboîtement du côté périphérique pour le logement de l'élément fonctionnel (2, 3, 4).

9. Dispositif (1) selon au moins une des revendications précédentes, **caractérisé en ce que** la pièce saillante (14, 15) est dotée d'un moyen de fixation pour la fixation temporaire de l'élément fonctionnel (2, 3, 4) dans le logement (12, 13).

10. Dispositif (1) selon au moins une des revendications précédentes, **caractérisé en ce que** la pièce saillante (14, 15) est reliée à un entraînement par broche (26) au moyen d'un bras de levier (22, 23).

11. Dispositif (1) selon au moins une des revendications précédentes, **caractérisé en ce que** le logement (12, 13) comporte un chariot, qui est relié à la pièce saillante mobile par pivotement (14, 15) au moyen d'un palier rotatif.

12. Dispositif (1) selon au moins une des revendications précédentes, **caractérisé en ce qu'**une unité d'actionnement est associée à la pièce saillante (14, 15), laquelle est mobile parallèlement au plan du mouvement de pivotement et est reliée à la pièce saillante (14, 15) au moyen d'un entraîneur.

13. Dispositif (1) selon au moins une des revendications précédentes, **caractérisé en ce qu'**au moins un marquage et/ou un capteur pour détecter la position angulaire respective est associé à la pièce saillante (14, 15).

14. Dispositif (1) selon au moins une des revendications précédentes, **caractérisé en ce que** le dispositif (1) présente un accessoire de centrage, en particulier un mandrin de centrage, pour le positionnement relatif par rapport à l'enceinte (5), qui peut à cet effet être introduit temporairement dans les passages (9) dans l'enceinte (5).

15. Dispositif (1) selon au moins une des revendications précédentes, **caractérisé en ce que** la pièce saillante (14, 15) présente une butée axiale (27) à l'opposé de la direction de jonction (F) de l'arbre (10).

16. Dispositif (1) selon au moins une des revendications précédentes, **caractérisé en ce que** la pièce saillante (14, 15) est réalisée de façon mobile dans la direction axiale (droite 11) de l'arbre (10) pour le réglage de la position axiale relative de l'élément fonctionnel (2, 3, 4) sur l'arbre (10).

17. Dispositif (1) selon au moins une des revendications précédentes, **caractérisé en ce qu'**un dispositif de chauffage pour le chauffage des éléments fonctionnels (2, 3, 4) est associé à la pièce saillante (14, 15).

18. Procédé de positionnement correct de plusieurs éléments fonctionnels présentant un évidement pour un arbre, en particulier des cames, des masses d'équilibrage, des roues dentées et/ou des paliers, qui sont d'abord engagés sur l'arbre de façon mobile par rapport à l'arbre, dans lequel ceux-ci sont positionnés temporairement dans une pièce saillante respective d'un logement du dispositif fixant la position angulaire de l'élément fonctionnel respectif, de telle manière qu'ensuite, dans une position relative du dispositif par rapport à l'enceinte, dans laquelle les évidements des éléments fonctionnels se trouvent en alignement avec des passages de l'enceinte, l'arbre soit introduit de l'extérieur à travers un passage de l'enceinte et d'autres évidements des éléments fonctionnels, **caractérisé en ce que** la position angulaire définie d'au moins certains des multiples éléments fonctionnels est réglée après l'introduction de l'arbre par un mouvement relatif de la pièce saillante par rapport au logement et l'élément fonctionnel respectif est fixé sur l'arbre dans la position angulaire ainsi réglée.

19. Procédé selon la revendication 18, **caractérisé en ce que** la pièce saillante est déplacée le long d'un chemin circulaire.

20. Procédé selon la revendication 18 ou 19, **caractérisé en ce que** la pièce saillante est réglée manuellement au moyen d'un curseur, qui coopère avec un bras de levier de la pièce saillante mobile par pivotement.

21. Procédé selon au moins une des revendications 18 à 20, **caractérisé en ce que** les éléments fonctionnels sont chauffés dans leur pièce saillante.
